**Europäisches Patentamt**

**European Patent Office**

**Office européen des brevets**

(11) Veröffentlichungsnummer: **0 021 091**

**A1**

(12) **EUROPÄISCHE PATENTANMELDUNG**

(21) Anmeldenummer: **80102978.6**

(22) Anmeldetag: **28.05.80**

(51) Int. Cl.³: **G 02 B 7/26, G 01 M 11/00**

(30) Priorität: **08.06.79 DE 2923363**

(43) Veröffentlichungstag der Anmeldung: **07.01.81**
**Patentblatt 81/1**

(84) Benannte Vertragsstaaten: **FR GB IT NL**

(71) Anmelder: **SIEMENS AKTIENGESELLSCHAFT Berlin und München, Postfach 22 02 61, D-8000 München 22 (DE)**

(72) Erfinder: **Fromm, Ingrid, Dipl.-Phys., Jawlenskystrasse 10, D-8000 München 71 (DE)**
Erfinder: **Unterberger, Hans, Dr., Groschenweg 48a, D-8000 München 82 (DE)**

(54) **Verfahren zur Überwachung und Minimierung von Spleissverlusten bei der Spleissung von Glasfaserkabeln und Vorrichtung zur Durchführung des Verfahrens.**

(57) Die Erfindung betrifft ein Verfahren zur Überwachung und Minimierung von Spleißverlusten bei der Spleißung von Glasfaserkabeln und eine Anordnung zur Durchführung des Verfahren.

Ein Problem bei der Verlegung von Glasfaserkabeln ist das Faserspleißen. Eine Spleißstelle soll möglichst geringe Verluste aufweisen. Ein optimales Spleißen von Glasfaserkabeln ist «im Feld», d. h. ohne die Hilfsmittel eines Laboratoriums, äußerst schwierig.

Der Erfindung liegt die Aufgabe zugrunde, ein Verfahren und eine Anordnung zur Durchführung des Verfahrens zu schaffen, mittels derer dem Monteur ohne großen technischen Aufwand und ohne eine Stromversorgung die Überwachung und Minimierung von Spleißverlusten ermöglicht ist. Die der Erfindung zugrundeliegende Aufgabe wird durch das erfindungsgemäße Verfahren zur Überwachung und Minimierung von Spleißverlusten bei der Spleißung von Glasfaserkabeln gelöst, das dadurch gekennzeichnet ist, daß die bei unvollkommener Spleißung aus der Spleißstelle austretende Lichtleistung fotoelektrisch abgetastet wird, daß ein von der austretenden Lichtleistung ableitbares Signal bewertet wird und daß die Spleißstelle solange justiert wird, bis ein erzielbares, vorbestimmtes Minimum des aus dem abgeleiteten Signal erkennbaren Spleißverlustes erreicht ist.

BEZEICHNUNG GEÄNDERT
siehe Titelseite

SIEMENS AKTIENGESELLSCHAFT     Unser Zeichen
Berlin und München            VPA 79 P 7 0 7 8

**Verfahren zur Überwachung und Minimierung von Spleißverlusten bei der Spleißung von Glasfaserkabeln**

Die Erfindung betrifft ein Verfahren zur Überwachung
und Minimierung von Spleißverlusten bei der Spleißung
von Glasfaserkabeln und eine Anordnung zur Durchführung
des Verfahrens.

Ein Problem bei der Verlegung von Glasfaserkabeln ist
das Faserspleißen. Eine Spleißstelle soll möglichst geringe Verluste aufweisen. Ein optimales Spleißen von
Glasfaserkabeln ist "im Feld", d.h. ohne die Hilfsmittel
eines Laboratoriums, äußerst schwierig.

Der Erfindung liegt die Aufgabe zugrunde, ein Verfahren
und eine Anordnung zur Durchführung des Verfahrens zu
schaffen, mittels derer dem Monteur ohne großen technischen Aufwand und ohne eine Stromversorgung die Überwachung und Minimierung von Spleißverlusten ermöglicht
ist.

Pap 1 The / 7.6.1979

Die der Erfindung zugrundeliegende Aufgabe wird durch das erfindungsgemäße Verfahren zur Überwachung und Minimierung von Spleißverlusten bei der Spleißung von Glasfaserkabeln gelöst, das dadurch gekennzeichnet ist, daß die bei unvollkommener Spleißung aus der Spleißstelle austretende Lichtleistung fotoelektrisch abgetastet wird, daß ein von der austretenden Lichtleistung ableitbares Signal bewertet wird und daß die Spleißstelle solange justiert wird, bis ein erzielbares, vorbestimmtes Minimum des aus dem abgeleiteten Signal erkennbaren Spleißverlustes erreicht ist.

Die Erfindung bietet den Vorteil, daß ein nur geringer technischer Aufwand erforderlich ist und eine lokale Stromversorgung nicht benötigt wird. Außerdem werden vorteilhafterweise die Spleißarbeiten während der Justierung durch die Bewertung von ableitbaren Signalen nicht behindert.

Weiterbildungen der Erfindung sind durch die in den Unteransprüchen angegebenen Merkmale gekennzeichnet.

Die Erfindung soll an Hand einer ein Ausführungsbeispiel für die Erfindung betreffenden Figur erläutert werden.

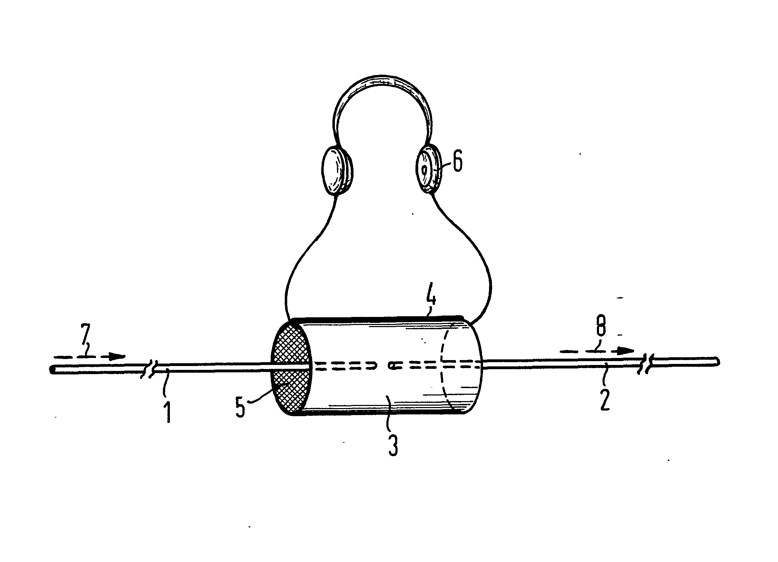

Die Figur zeigt ein erstes Glasfaserkabel 1, ein zweites Glasfaserkabel 2, einen Meßzylinder 3, ein Scharnierband 4, eine fotoelektrische Schicht 5, einen Kopfhörer 6 und durch gestrichelte Pfeile symbolisch angedeutete eingekoppelte Lichtimpulse 7 und durchgeleitete Lichtimpulse 8.

Der Spleißstelle werden von einem entfernten Ende des ersten Glasfaserkabels 1 Lichtimpulse 7, die in das erste Glasfaserkabel 1 eingekoppelt werden, zugeführt. Im Idealfall wird die eingekoppelte Lichtleistung über das zweite Glasfaserkabel 2 in Form durchgeleiteter Lichtimpulse 8 unvermindert weitergegeben. Zur Überwachung und Justierung der Spleißstelle wird. nun der mittels des Scharnierbandes 4 aufklappbare Meßzylinder 3 umhüllend über die Spleißstelle gesetzt. Die fotoelektrische Schicht 5, die die Innenfläche des Zylinders ganzflächig durchgehend bedeckt, hat die Aufgabe, die eingekoppelten Lichtimpulse 7 in elektrische Impulse umzusetzen. Die fotoelektrische Schicht 5 hat zwei bei Belichtung zueinander eine Potentialdifferenz aufweisende Anschlüsse, die über je eine flexible Verbindungsader mit den Eingangsklemmen des Kopfhörers 6 verbunden sind. Etwaig aus der Spleißstelle austretendes Licht strahlt auf die fotoelektrische Schicht 5 und erzeugt in bekannter Weise eine elektrische Spannung. Die eingekoppelten Lichtimpulse 7 bestehen aus gepulstem Laserlicht, dessen Pulsfrequenz einer im akustisch wahrnehmbaren Bereich liegenden Frequenz entspricht. Die auf der fotoelektrischen Schicht 5 erzeugte Spannung des Meßzylinders 3 wird über je eine flexible Leitungsader den Eingangsklemmen des Kopfhörers 6 zugeführt.

Der Monteur hat nun die Aufgabe, die Spleißstelle solange zu justieren, bis ein Minimum an Lautstärke in dem Kopfhörer 6 wahrnehmbar ist. Vorzugsweise wird die Pulsfrequenz der eingekoppelten Lichtimpulse 7 auf das Maximum der Ohrempfindlichkeit, nämlich ca. 1000 Hz, eingestellt. Die Laserlichtleistung der eingekoppelten Lichtimpulse 7 wird entsprechend der Faserlänge und der Faserd/ämpfung des ersten Glasfaserkabels 1 so eingestellt, daß ein Minimum seitlich aus der Spleißstelle austretenden Laserlichtes einen hörbaren Ton in dem Kopfhörer 6 erzeugt.

Die fotoelektrische Schicht 5 kann in einem weiteren, nicht gezeigten Ausführungsbeispiel für die Erfindung durch eine Vielzahl von ganzflächig die Innenfläche des Meßzylinders bedeckenden Fotoelementen ersetzt sein, wobei alle Fotoelemente elektrisch miteinander verbunden sind und zwei bei Belichtung zueinander eine Potentialdifferenz aufweisende Anschlüsse vorgesehen sind, die über je eine flexible Verbindungsader mit den Eingangsklemmen des Kopfhörers 6 verbunden sind.

Gemäß einer anderen Weiterbildung der Erfindung ist die spektrale Empfindlichkeit der fotoelektrischen Schicht 5 bzw. der Vielzahl der Fotoelemente an die Wellenlänge des verwendeten Laserlichtes angepaßt.

Gemäß einer anderen Weiterbildung der Erfindung ist vorgesehen, an einem von der Spleißstelle entfernten Ende des ersten Glasfaserkabels Dauerlicht einzukoppeln, das in ein elektrisches Dauersignal umgesetzt und einem Strommeßgerät zugeführt wird. Die optimale Spleißstellung kann damit durch Abgleich auf ein Stromminimum erreicht werden. Darüber hinaus können die absoluten Spleißverluste auf einfache Art bestimmt werden.

10 Patentansprüche
 1 Figur

<u>Patentansprüche</u>

1. Verfahren zur Überwachung und Minimierung von Spleißverlusten bei der Spleißung von Glasfaserkabeln, dadurch g e k e n n z e i c h n e t , daß die bei unvollkommener Spleißung aus der Spleißstelle austretende Lichtleistung fotoelektrisch abgetastet wird, daß ein von der austretenden Lichtleistung ableitbares Signal bewertet wird und daß die Spleißstelle solange justiert wird, bis ein erzielbares, vorbestimmtes Minimum des aus dem abgeleiteten Signal erkennbaren Spleißverlustes erreicht ist.

2. Verfahren nach Anspruch 1, dadurch g e k e n n - z e i c h n e t , daß an einem von der Spleißstelle entfernten Ende eines ersten Glasfaserkabels (1) Lichtimpulse (7) in das erste Glasfaserkabel (1) eingekoppelt werden und daß diese eingekoppelten Lichtimpulse (7) in elektrische Impulse umgesetzt werden, die einer Anzeigeeinrichtung zugeführt werden.

3. Verfahren nach Anspruch 2, dadurch g e k e n n - z e i c h n e t , daß die eingekoppelten Lichtimpulse (7) aus gepulstem Laserlicht bestehen, daß die Pulsfrequenz einer im akustisch wahrnehmbaren Bereich liegenden Frequenz entspricht und daß die abgeleiteten elektrischen Impulse einem elektroakustischen Wandler zugeführt werden.

4. Verfahren nach Anspruch 3, dadurch g e k e n n - z e i c h n e t , daß die Pulsfrequenz der eingekoppelten Lichtimpulse (7) auf das Maximum der Ohrempfindlichkeit, nämlich ca. 1000 Hz, eingestellt wird.

5. Verfahren nach Anspruch 3, dadurch  g e k e n n  - z e i c h n e t  , daß die Laserlichtleistung entsprechend der Faserlänge und der Faserdämpfung des ersten Glasfaserkabels (1) so eingestellt wird, daß ein Minimum seitlich aus der Spleißstelle austretenden Laserlichtes einen hörbaren Ton in dem Kopfhörer (6) erzeugt.

6. Verfahren nach Anspruch 3, dadurch  g e k e n n  - z e i c h n e t  , daß die Spleißstelle solange justiert wird, bis ein Minimum der Lautstärke eines von dem elektroakustischen Wandler abgegebenen Tones erreicht ist.

7. Verfahren nach Anspruch 1, dadurch  g e k e n n  - z e i c h n e t  , daß an einem von der Spleißstelle entfernten Ende eines ersten Glasfaserkabels (1) Dauerlicht in das erste Glasfaserkabel (1) eingekoppelt wird und daß dieses eingekoppelte Dauerlicht in ein elektrisches Dauersignal umgewandelt wird, das einem Strommeßgerät zugeführt wird.

8. Anordnung zur Durchführung des Verfahrens nach einem der vorhergehenden Ansprüche, dadurch  g e k e n n  - z e i c h n e t  , daß ein durch ein Scharnierband (4) aufklappbarer Meßzylinder (3) mit einer auf seiner Innenfläche durchgehend ganzflächig aufgetragenen fotoelektrischen Schicht (5) vorgesehen ist, der umhüllend über die betreffende Spleißstelle setzbar ist und daß die fotoelektrische Schicht (5) zwei bei Belichtung zueinander eine Potentialdifferenz aufweisende Anschlüsse hat, die über je eine flexible Verbindungsader mit den Eingangsklemmen eines Kopfhörers (6) verbunden sind.

0021091

9. Anordnung zur Durchführung des Verfahrens nach einem der Ansprüche 1 bis 6, dadurch g e k e n n z e i c h - n e t , daß ein durch ein Scharnierband (4) aufklappbarer Meßzylinder (3) mit einer Vielzahl von ganzflächig seine Innenfläche bedeckenden Fotoelementen vorgesehen ist, der umhüllend über die betreffende Spleißstelle setzbar ist, daß alle Fotoelemente elektrisch miteinander verbunden sind und daß zwei bei Belichtung zueinander eine Potentialdifferenz aufweisende Anschlüsse vorgesehen sind, die über je eine flexible Verbindungsader mit den Eingangsklemmen eines Kopfhörers (6) verbunden sind.

10. Anordnung nach Anspruch 7 oder 8, dadurch g e - k e n n z e i c h n e t , daß die spektrale Empfindlichkeit der fotoelektrischen Schicht (5) bzw. der Vielzahl der Fotoelemente an die Wellenlänge des verwendeten Laserlichtes angepaßt ist.

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | <u>DE - A - 2 626 839</u> (SIEMENS)<br>* Seite 5, Zeilen 16-23; Ansprüche 1,2,4,5 * | 1,2 |
| | <u>GB - A - 1 500 026</u> (POST OFFICE)<br>* Ansprüche; Figuren * | 1,2 |
| | <u>FR - A - 2 387 462</u> (THOMSON CSF)<br>* Seite 5, Zeilen 3-34; Seite 5, Zeilen 1-19; Figuren * | 1,2 |
| E | <u>DE - A - 2 850 430</u> (SIEMENS)<br>* Ansprüche 6,7 * | 3,5,6 |
| A | <u>DE - A - 2 446 152</u> (LICENTIA)<br>* Ansprüche; Figuren * | 1 |
| A | <u>US - A - 3 800 388</u> (M. BORNER)<br>* Spalte 3, Zeilen 43-60 * | 1 |

**KLASSIFIKATION DER ANMELDUNG (Int.Cl.3)**

G 02 B 7/26
G 01 M 11/00

**RECHERCHIERTE SACHGEBIETE (Int. Cl. 3)**

G 02 B 7/26
G 01 M 11/00
G 01 B 11/26

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 18-08-1980 | PFAHLER |